# EUROPEAN PATENT APPLICATION

(11) **EP 4 119 364 A1**
(43) Date of publication of application: **18.01.2023**
(21) Application number: 21855792.4
(22) Date of filing: 30.03.2021
(51) Int. Cl.: B60C 23/04, B60C 29/02

(54) **VALVE STEM AND TIRE VALVE**

(30) Priority: 11.08.2020 JP 2020136058
(71) Applicant: Pacific Industrial Co., Ltd., Ogaki-shi, Gifu 503-8603 (JP)
(72) Inventor: SUNAYAMA, Yuki, Ogaki-shi, Gifu 503-8603 (JP)
(74) Representative: Kramer Barske Schmidtchen Patentanwälte PartG mbB
(86) International application number: PCT/JP2021/013547
(87) International publication number: WO 2022/034713

(57) **Abstract**

To provide a valve stem and a tire valve capable of connecting electric circuits to each other even while a valve cap is removed.

A valve stem (10) has a tubular structure, is fixed in a state of penetrating a valve mounting hole (81H) of a tire wheel (80), and accommodates a valve core (20). The valve stem includes a pair of internal electrodes (11N, 31N) connected to an internal circuit (91) in a tire (82); a pair of external electrodes (11G, 31G) arranged on an outer peripheral surface of a tire outer protruding portion (17) protruding to the outside of the tire (82) in the valve stem (10)and connectable to an external circuit (96) outside the tire (82); and first and second conductive members (11, 31) having the internal electrodes (11N, 31N) and the external electrodes (11G, 31G) and insulated from each other.

## Description

### TECHNICAL FIELD

The present disclosure relates to a valve stem that is fixed in a state of penetrating a valve mounting hole of a tire wheel and accommodates a valve core, and a tire valve including the valve stem.

### BACKGROUND ART

Conventionally, a tire valve that connects an electric circuit on a distal end side and an electric circuit on a proximal end side of the tire valve by way of a valve core is known (see e.g., Patent Document 1). In this tire valve, the electric circuits can be connected to each other when the valve cap is attached.

### RELATED ART DOCUMENT

### PATENT DOCUMENT

Patent Document 1: WO 2019/194303 (Paragraphs [0026], [0027], etc.)

### SUMMARY OF THE INVENTION

### PROBLEMS TO BE SOLVED BY THE INVENTION

However, in the conventional configuration described above, there is a problem that the electric circuits cannot be connected to each other while the valve cap is removed, for example, when air is being supplied into the tire.

### MEANS OF SOLVING THE PROBLEMS

A valve stem according to one aspect of the present disclosure made to solve the above problems is a valve stem that has a tubular structure, is fixed in a state of penetrating a valve mounting hole of a tire wheel, and accommodates a valve core, the valve stem including: a pair of internal electrodes connected to an internal circuit in a tire; a pair of external electrodes arranged on an outer peripheral surface of a tire outer protruding portion protruding to an outside of the tire in the valve stem and connectable to an external circuit outside the tire; and first and second conductive members having the internal electrodes and the external electrodes and insulated from each other.

### BRIEF DESCRIPTION OF THE DRAWINGS

Fig. 1 is a cross-sectional view of a tire wheel to which a tire valve including a valve stem according to a first embodiment of the present disclosure is attached.
Fig. 2 is a cross-sectional side view of the valve stem.
Fig. 3 is a perspective view of the valve stem.
Fig. 4(A) is an enlarged perspective view of the periphery of a side surface through-hole of the valve stem, and Fig. 4(B) is a perspective view of an inner sleeve.
Fig. 5(A) is an enlarged cross-sectional side view of the periphery of the side surface through-hole of the valve stem to which a connector is attached, Fig. 5(B) is a perspective view of the connector viewed from the inner side of a stem main body through the side surface through-hole, and Fig. 5(C) is a front view of the connector.
Fig. 6(A) is an enlarged cross-sectional side view of a proximal end portion of the valve stem, and Fig. 6(B) is a perspective view of a connection terminal of the connector.
Fig. 7(A) is a perspective view of a tire valve including a valve stem according to a second embodiment, and Fig. 7(B) is a perspective view of first and second conductive members.
Fig. 8(A) is a cross-sectional plan view of the vicinity of an external electrode of the valve stem according to the second embodiment, and Fig. 8(B) is a cross-sectional plan view of a portion near a proximal end of the valve stem according to the second embodiment.

### MODE FOR CARRYING OUT THE INVENTION

### [First Embodiment]

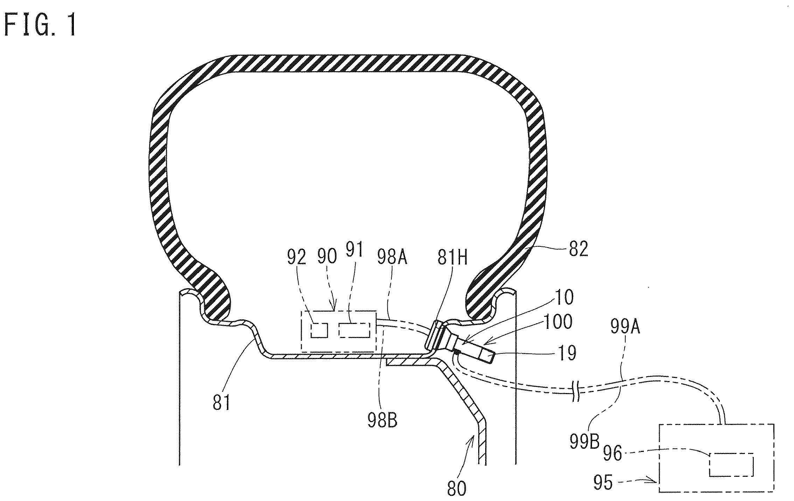

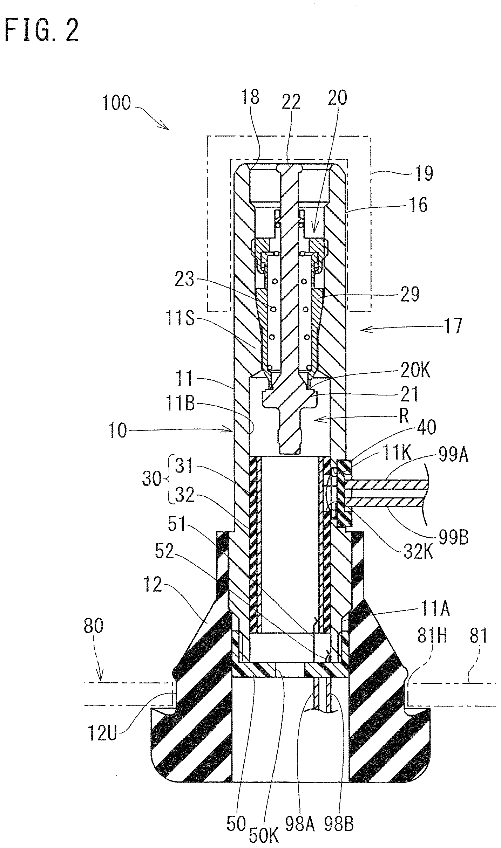

Fig. 1 shows a tire valve 100 including a valve stem 10 of a first embodiment. The tire valve 100 of the present embodiment is mounted in a valve mounting hole 81H provided in a rim 81 of a tire wheel 80. Specifically, a proximal end portion of the valve stem 10 of the tire valve 100 is fitted and fixed in a state of penetrating the valve mounting hole 81H. When the tire valve 100 is mounted to the tire wheel 80, a distal end side portion of the valve stem 10 having an air injection port 18 (see Fig. 2) protrudes to the outside of the tire 82.

As shown in Fig. 2, the valve stem 10 has a tubular structure in which the outer side of a stem main body 11 having a circular tubular shape is covered with an elastic seal member 12. Specifically, a proximal end portion of the stem main body 11 is covered with the elastic seal member 12, and a distal end side portion of the stem main body 11 is exposed from the elastic seal member 12. An air flow hole R that communicates the inside and the outside of the tire 82 with each other is provided on the inner side of the stem main body 11. The distal end of the stem main body 11 is provided with the air injection port 18 described above for injecting air into the tire 82. A male thread portion 16 is formed on an outer peripheral surface of a distal end portion of the stem main body 11, and a valve cap 19 is screwed onto the male thread portion 16 from the outer side. The stem main body 11 has conductivity and, for example, is made of metal.

A small-diameter hole portion 11S having the narrowest inner diameter is formed at a position near the distal end of the air flow hole R of the stem main body 11. A straight hole portion 11B having a larger diameter than the small-diameter hole portion 11S extends to the proximal end of the stem main body 11 on the proximal end side of the small-diameter hole portion 11S in the air flow hole R. A proximal end side small-diameter portion 11A whose outer diameter is reduced and which extends to the proximal end of the stem main body 11 is formed at the proximal end portion of the stem main body 11. An annular gap is formed between an outer peripheral surface of the proximal end side small-diameter portion 11A and an inner peripheral surface of the elastic seal member 12.

A valve core 20 is accommodated inside the stem main body 11. The outer peripheral surface of the valve core 20 is sealed with the inner peripheral surface of the stem main body 11, and the air flow hole R is opened and closed by opening and closing of the valve core 20. Specifically, the valve core 20 is supported by a tubular fixing base 29 in a state where a shaft 22 is inserted in a linearly movable manner. By linearly moving the shaft 22, a valve body 21 at the end portion of the shaft 22 opens and closes a valve port 20K at the proximal end portion of the tubular fixing base 29. The valve body 21 is biased by a compression coil spring 23 to a state of closing the valve port 20K. The small-diameter hole portion 11S of the stem main body 11 is a core fitting portion to which the valve core 20 (tubular fixing base 29) is fitted, and the inner peripheral surface of the small-diameter hole portion 11S and the outer peripheral surface of the tubular fixing base 29 are sealed.

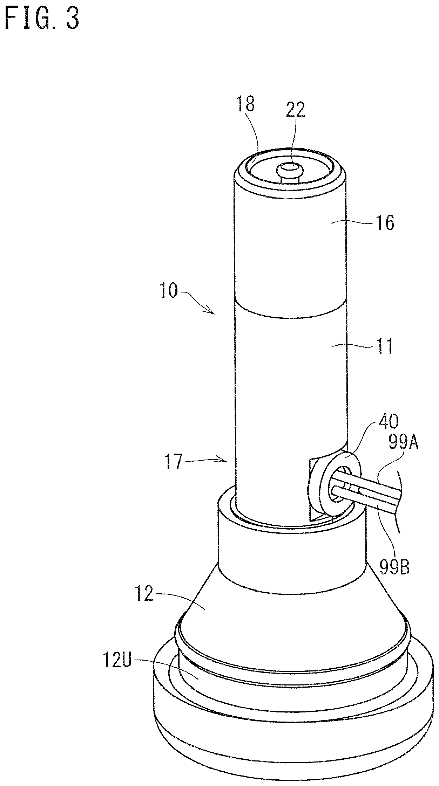

An annular engagement groove 12U is formed on the outer peripheral surface of the proximal end portion of the elastic seal member 12. When the tire valve 100 is mounted to the valve mounting hole 81H of the tire wheel 80, the elastic seal member 12 is press-fitted into the valve mounting hole 81H, and the engagement groove 12U is engaged with an opening edge of the valve mounting hole 81H. Therefore, a portion of the valve stem 10 on the distal end side of the engagement groove 12U is a tire outer protruding portion 17 protruding to the outside of the tire 82 (see Figs. 2 and 3). In the present embodiment, the proximal end of the stem main body 11 is disposed on the distal end side of the valve stem 10 of the engagement groove 12U. Therefore, the tire outer protruding portion 17 includes the stem main body 11 and part of the elastic seal member 12. The elastic seal member 12 is made of an insulating elastomer.

As illustrated in Fig. 2, an inner sleeve 30 is fitted and fixed to the inner side of the stem main body 11. Specifically, the inner sleeve 30 has a cylindrical shape, is fitted in the straight hole portion 11B of the stem main body 11, and is disposed on the proximal end side of the small-diameter hole portion 11S and the tubular fixing base 29.

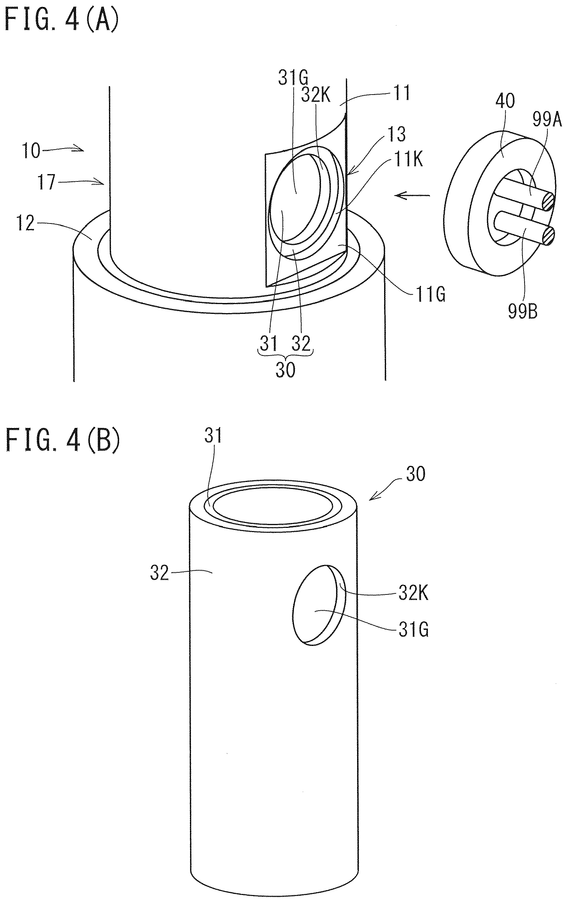

As illustrated in Fig. 4(B), the inner sleeve 30 is formed by covering an outer peripheral surface of an inner sleeve main body 31 having conductivity (e.g., made of metal) with an insulating layer 32. The inner sleeve main body 31 has a cylindrical shape. The insulating layer 32 insulates the inner sleeve main body 31 and the stem main body 11 from each other.

Here, the valve stem 10 can connect electric circuits inside and outside the tire 82. Specifically, as shown in Fig. 1, when the valve stem 10 is mounted in the valve mounting hole 81H, for example, the proximal end portion of the valve stem 10 is connected to cables 98A and 98B so as to be connectable to an internal circuit 91 disposed in the tire 82. The tire outer protruding portion 17 (see Fig. 2) of the valve stem 10 is connected to, for example, cables 99A and 99B when a vehicle stops, so as to be connectable to an external circuit 96 disposed outside the tire 82.

Examples of a tire internal device 90 including the internal circuit 91 include a device including a sensor 92 that detects a state of the tire 82 and transmitting a detection result of the sensor 92 by the internal circuit 91. Such a sensor 92 may be, for example, a pressure sensor that detects the internal pressure of the tire 82 or a temperature sensor. Examples of the tire external device 95 including the external circuit 96 include a power supply device that supplies power to the tire internal device 90, a receiver that receives detection data of the sensor 92 or the like of the tire internal device 90, and the like.

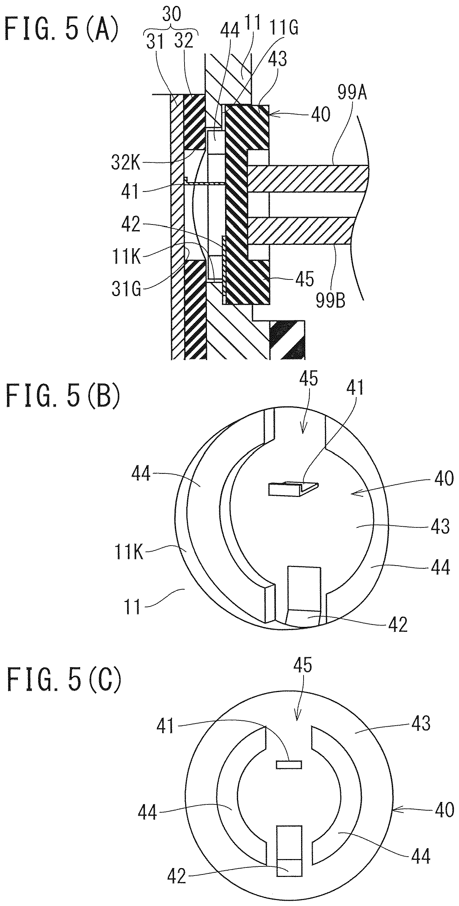

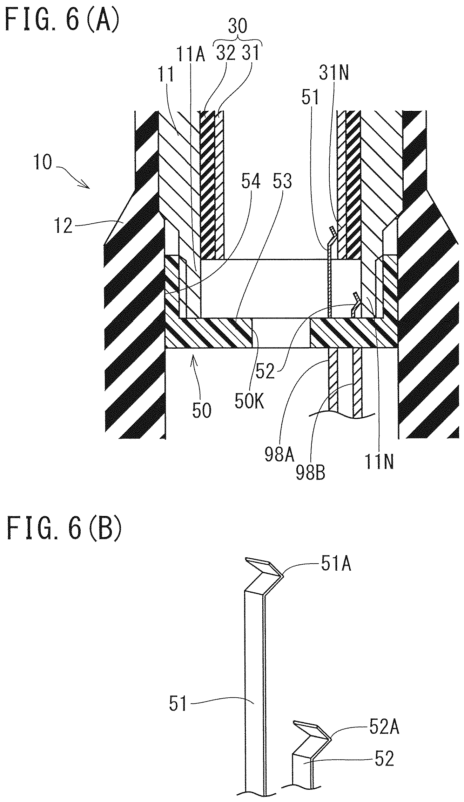

Hereinafter, a structure of the valve stem 10 for connecting the internal circuit 91 and the external circuit 96 disposed inside and outside the tire 82 will be described. The valve stem 10 includes first and second conductive members including a pair of internal electrodes 11N and 31N connected to the internal circuit 91 (i.e., cables 98A, 98B) (see Fig. 6(A)) and a pair of external electrodes 11G and 31G connected to the external circuit 96 (i.e., cables 99A, 99B) (see Figs. 4(A) and 5(A)), and being insulated from each other. In the present embodiment, the first and second conductive members are the stem main body 11 and the inner sleeve main body 31, respectively.

As illustrated in Fig. 6(A), in the present embodiment, the pair of internal electrodes 11N and 31N connected to the internal circuit 91 (cable 98A, 98B) is the proximal end portion of the stem main body 11 and the proximal end portion of the inner sleeve main body 31, respectively. Connection terminals 51 and 52 of the connector 50 are connected to the distal ends of the cables 98A and 98B, respectively, and the connection terminals 51 and 52 abut on the internal electrodes 11N and 31N of the valve stem 10, for example, from the radially inner side. Specifically, the connector 50 has a tubular bracket 53 having one bottomed end, and is screwed with a male thread portion formed on the outer peripheral surface of the proximal end side small-diameter portion 11A of the stem main body 11 to be fixed to the proximal end portion of the stem main body 11. The bracket 53 is made of an insulating material such as resin, and insulates the connection terminals 51 and 52 from each other. A vent 50K is formed at the center of a bottom wall of the bracket 53. The outer peripheral wall 54 of the bracket 53 is inserted into the annular gap described above formed between the proximal end side small-diameter portion 11A and the elastic seal member 12. In the present embodiment, the connection terminals 51 and 52 of the connector 50 are formed of bus bars extending in the axial direction of the valve stem 10, and for example, the distal end portions of the connection terminals 51 and 52 have hill-shaped bent portions 51A and 52A that are bent radially outward of the valve stem 10 and then bent radially inward toward the distal end, where the bent portions 51A and 52A facilitate contact with the internal electrodes 11N and 31N of the valve stem 10. In the present embodiment, the proximal end side small-diameter portion 11A corresponds to an "inner connector coupling portion" described in the claims.

Next, the external electrodes 11G and 31G of the valve stem 10 connected to the external circuit 96 will be described. As illustrated in Figs. 2 and 4(A), a side surface through-hole 11K penetrating the inside and outside in the radial direction is formed in a portion of the stem main body 11 exposed from the elastic seal member 12. The side surface through-hole 11K is disposed on the proximal end side of the small-diameter hole portion 11S into which the valve core 20 is fitted in the stem main body 11. As shown in Fig. 4(A), an opening edge of the side surface through-hole 11K constitutes one external electrode 11G of the valve stem 10. The side surface through-hole 11K is provided in a portion having a shape obtained by cutting the outer peripheral surface of the stem main body 11 flat, and a flat surface having a quadrangular outer shape is provided at the opening edge of the side surface through-hole 11K.

As illustrated in Fig. 4(B), an insulating layer through-hole 32K is formed in the insulating layer 32 having a circular tubular shape of the inner sleeve 30 at a position near the distal end of the inner sleeve 30 in the axial direction. As a result, part of the outer peripheral surface of the portion near the distal end of the inner sleeve main body 31 is exposed from the insulating layer through-hole 32K. Furthermore, the insulating layer through-hole 32 K is provided at a position corresponding to the side surface through-hole 11K of the valve stem 10. That is, the insulating layer through-hole 32K is provided at a position facing the side surface through-hole 11K in the radial direction of the valve stem 10. Therefore, a portion of the inner sleeve main body 31 exposed from the insulating layer through-hole 32K is exposed to the outside from the side surface through-hole 11K of the stem main body 11. This exposed portion of the inner sleeve main body 31 constitutes the other external electrode 31G of the valve stem 10. The opening diameter of the insulating layer through-hole 32K is smaller than the opening diameter of the side surface through-hole 11K of the stem main body 11, and the entire opening edge of the insulating layer through-hole 32K is exposed from the side surface through-hole 11K of the stem main body 11. The inner sleeve 30 is adhered to the inner surface of the stem main body 11 to seal the side surface through-hole 11K.

As shown in Fig. 5(A), for example, connection terminals 41 and 42 of a connector 40 are respectively connected to the distal ends of the cables 99A and 99B from the outside of the tire 82, and the connection terminals 41 and 42 abut on the external electrodes 31G and 11G of the valve stem 10 from the radially outer side. Specifically, as illustrated in Figs. 5(B) and 5(C), the connector 40 includes a gasket 45 made of an insulating member that couples and fixes the cables 99A and 99B and the connection terminals 41 and 42 (Note that in Fig. 5(B), the inner sleeve 30 is not illustrated). The gasket 45 has a disk-shaped base 43 and has a pair of fitting arcuate protrusions 44 protruding out from an opposing surface of the disk-shaped base 43 to the valve stem 10. The disk-shaped base 43 abuts on the flat surface of the opening edge of the side surface through-hole 11K of the stem main body 11. Then, the distal end portion of one of the connection terminals 41 linearly protruding from the disk-shaped base 43 of the connector 40 abuts on the external electrode 31G on the outer peripheral surface of the inner sleeve main body 31 through the insulating layer through-hole 32K. For example, the connection terminal 41 is formed of a bus bar and has a shape in which the distal end portion is bent. In addition, the other connection terminal 42 extending radially outward from the disk-shaped base 43 of the connector 40 along the disk-shaped base 43 abuts on the external electrode 11G (e.g., the proximal end side opening edge of the side surface through-hole 11K) of the stem main body 11. For example, the connection terminal 42 is formed of a bus bar, and has a shape in which a distal end portion is slightly bent toward a side away from the disk-shaped base 43. This facilitates contact between the connection terminal 42 and the external electrode 11G of the stem main body 11. The pair of fitting arcuate protrusions 44 has an arcuate shape along the outer edge of the disk-shaped base 43, and the outer peripheral surface of the fitting arcuate protrusion 44 is fitted into the side surface through-hole 11K of the stem main body 11 (the connection terminals 41 and 42 are disposed between the pair of fitting arcuate protrusions 44). Note that, for example, if the gasket 45 is formed of an elastomer and the outer peripheral radius of the fitting arcuate protrusion 44 is made larger than the inner peripheral radius of the side surface through-hole 11K of the stem main body 11, the attachment of the connector 40 to the valve stem 10 can be stabilized by pushing the fitting arcuate protrusion 44 into the side surface through-hole 11K. In the present embodiment, the side surface through-hole 11K of the stem main body 11, the opening edge (external electrode 11G) thereof, and the external electrode 31G constitute a connector coupling portion 13 coupled to the connector 40.

As described above, the valve stem 10 of the present embodiment is connected to the cables 98A and 98B and the cables 99A and 99B, and connects the internal circuit 91 inside the tire 82 and the external circuit 96 outside the tire 82.

In the valve stem 10 and the tire valve 100 of the present embodiment, the first and second conductive members (stem main body 11 and inner sleeve main body 31) insulated from each other are provided, and such first and second conductive members include the internal electrodes 11N, 31N connected to the internal circuit 91 in the tire 82 and the external electrodes 11G, 31G connected to the external circuit 96 outside the tire 82, respectively. Here, the external electrodes 11G and 31G are disposed on the outer peripheral surface of the tire outer protruding portion 17 of the valve stem 10 protruding outside the tire 82. As a result, the circuits inside and outside the tire 82 can be connected even in a state where the valve cap 19 is removed from the valve stem 10. For example, even when the valve cap 19 is removed and air is supplied into the tire 82 through the valve stem 10, power can be supplied to the internal circuit 91 in the tire 82. In addition, since the external electrodes 11G and 31G are configured independently of the valve core 20, the internal circuit 91 and the external circuit 96 can be connected regardless of the position of the valve body 21.

In addition, in the valve stem 10, the outer peripheral surface of the tire outer protruding portion 17 is provided with the pair of external electrodes 11G and 31G and includes a connector fitting portion (side surface through-hole 11K) to which the connector 40 provided in the external circuit 96 is fitted, so that the connector 40 of the external circuit 96 is easily coupled to the stem main body 11, and connection with the external circuit 96 is facilitated. When the connector 40 is not connected to the external electrodes 11G, 31G, a cover member that covers the external electrodes 11G, 31G may be attached to the stem main body 11.

In addition, in the valve stem 10, the pair of external electrodes 11G and 31G is disposed on the proximal end side of the small-diameter hole portion 11S in the tire outer protruding portion 17, and hence interference with the valve core 20 can be prevented even when the conductive member is disposed on the inner side of the valve stem 10 as in the inner sleeve 30.

### [Second Embodiment]

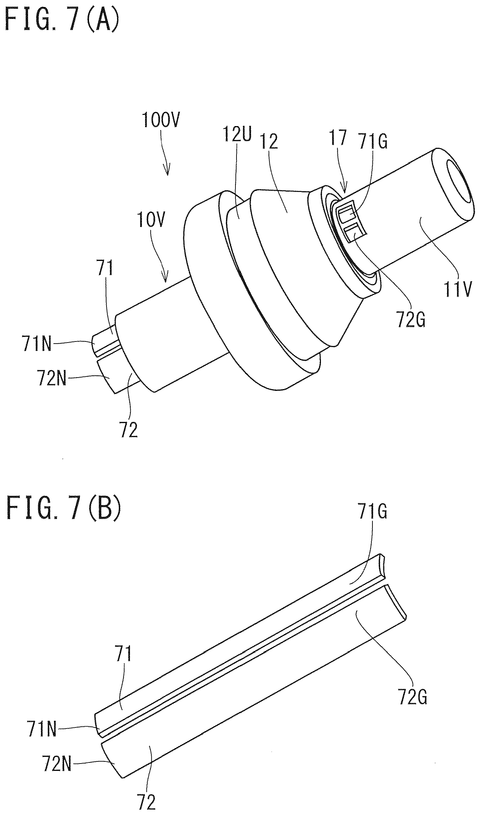

Fig. 7(A) shows a valve stem 10V and a tire valve 100V including the same of a second embodiment. The valve stem 10V and the tire valve 100V are different from the valve stem 10 and the tire valve 100 of the first embodiment in that a stem main body 11V is made of an insulating resin. The valve stem 10V has a tubular structure in which a middle portion in the axial direction of the cylindrical stem main body 11 is surrounded by the elastic seal member 12. Similarly to the first embodiment, the elastic seal member 12 is press-fitted into the valve mounting hole 81H (see Fig. 1) of the tire wheel 80, and the stem main body 11V is provided with the small-diameter hole portion 11S (see Fig. 2) to which the valve core 20 is fitted, and the valve core 20 is accommodated. In the tire valve 100V, the valve cap is screwed from the outer side onto the male thread portion provided on the outer peripheral surface of the distal end portion of the stem main body 11V.

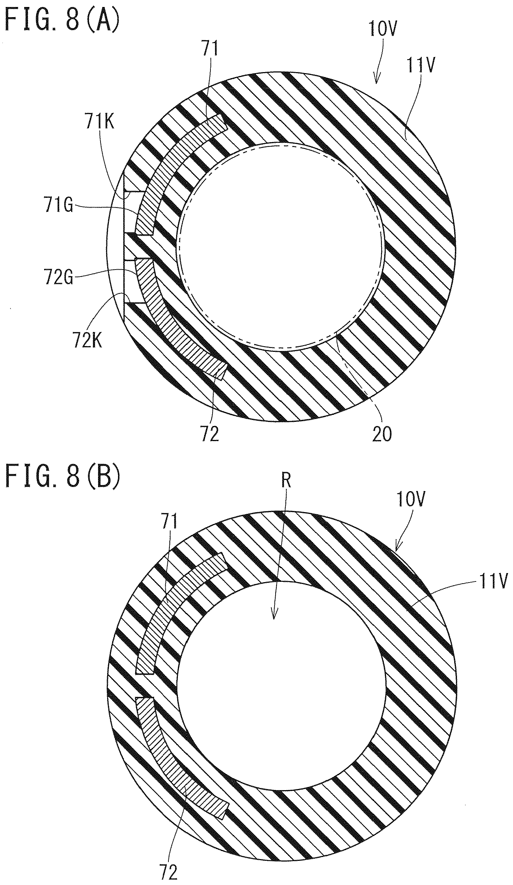

In the present embodiment, first and second conductive members 71 and 72 that connect the internal circuit 91 (see Fig. 1) inside the tire 82 and the external circuit 96 outside the tire 82 are embedded in the stem main body 11V in a state of being insulated from each other. As shown in Figs. 7(A) and 7(B), the first and second conductive members 71 and 72 extend linearly in the axial direction of the valve stem 10V and are arranged, for example, in the circumferential direction, and the proximal end portion disposed in the tire 82 is exposed from the stem main body 11V. The exposed proximal end portions of the first and second conductive members 71 and 72 are internal electrodes 71N and 72N connected to the internal circuit 91 (cables 98A, 98B). The first and second conductive members 71 and 72 have an arc shape along the outer peripheral surface of the stem main body 11V when viewed from the axial direction of the valve stem 10V (see Figs. 8(A) and 8(B)), and are formed of, for example, a metal bus bar.

As shown in Figs. 7(A) and 8(A), portions of the first and second conductive members 71 and 72 near the distal ends are arranged in the tire outer protruding portion 17 and exposed on the outer peripheral surface of the stem main body 11V. The exposed portions are a pair of external electrodes 71G and 72G connected to the external circuit 96 (cable 99A, 99B). Specifically, side surface openings 71K and 72K are formed in a recessed manner in an outer peripheral surface of a portion of the stem main body 11V near the distal end exposed from the elastic seal member 12, and outer side surfaces of a portion of the first and second conductive members 71 and 72 near the distal end are exposed inside the side surface openings 71K and 72K to form the external electrodes 71G and 72G. In the present embodiment as well, the side surface openings 71K and 72K are formed so as to be fitted with the connector of the external circuit 96, so that external electrodes 71G and 72G can be provided and the connector coupling portion coupled to the connector can be formed on the outer peripheral surface of the stem main body 11V.

Also in the valve stem 10V and the tire valve 100V of the present embodiment, since the external electrodes 71G and 72G are formed on the outer peripheral surface of the valve stem 10V, the circuits inside and outside the tire 82 can be connected even in a state where the valve cap is removed. Since the first and second conductive members 71 and 72 are not disposed on the inner side of the stem main body 11V, they do not interfere with the valve core 20. Therefore, the external electrodes 71G and 72G may be on the distal end side or the proximal end side of the core fitting portion of the valve stem 10V to which the valve core 20 is fitted, or may be at the same position as the core fitting portion in the axial direction of the valve stem 10V.

### [Other Embodiments]

(1) In the first embodiment, the tubular member (inner sleeve main body 31) is provided as the conductive member including the internal electrode 31N and the external electrode 31G, but may be a rod-shaped member.
(2) In the first embodiment, the conductive member (inner sleeve main body 31) including the internal electrode 31N and the external electrode 31G is provided on the inner side of the stem main body 11, but may be provided on the outer side. In this case, for example, portions other than the distal end portion and the proximal end portion of the conductive member may be embedded in the elastic seal member 12 to be insulated from the stem main body 11. The conductive member may be, for example, a rod shape or a circular tubular shape (e.g., concentric with the stem main body 11).
(3) In the first embodiment, the internal electrode 31N of the valve stem 10 connected to the internal circuit 91 may be a conductive additional component abutting on the inner sleeve main body 31. In addition, the internal electrode 11N of the valve stem 10 connected to the internal circuit 91 may be a conductive additional component abutting on the stem main body 11. These components include, for example, connection terminals 51 and 52 formed of bus bars, where in this configuration, the connection terminals 51 and 52 are fixed to the stem main body 11 and the inner sleeve main body 31, respectively, and are provided on the valve stem 10, instead of being provided on the internal circuit 91 side (cable 98A, 98B side).
(4) In the first embodiment, the external electrode 11G of the valve stem 10 connected to the external circuit 96 may be a conductive additional component abutting on the stem main body 11. In addition, the external electrode 31G of the valve stem 10 connected to the external circuit 96 may be a conductive component abutting on the inner sleeve main body 31 (e.g., one end portion of a penetrating component may be connected to the inner sleeve main body 31, and the other end portion may be exposed in the side surface through-hole 11K). These components include, for example, connection terminals 41 and 42 formed of bus bars, where in this configuration, the connection terminals 41 and 42 are fixed to the inner sleeve main body 31 and the stem main body 11 (e.g., the opening edge of the side surface through-hole 11K) and are provided on the valve stem 10, respectively, instead of being provided on the external circuit 96 side (cable 99A, 99B side).
(5) In the first embodiment, the external electrode 11G of the stem main body 11 is disposed at the opening edge of the side surface through-hole 11K, but may not be disposed in the vicinity of the side surface through-hole 11K (i.e., the vicinity of the external electrode 31G of the inner sleeve main body 31). For example, the external electrode 11G of the stem main body 11 may be disposed on the outer peripheral surface of the distal end portion of the valve stem 10.

### DESCRIPTION OF THE REFERENCE NUMERAL

- 10, 10V: Valve stem
- 11, 11V: Stem main body
- 11G: External electrode
- 11N: Internal electrode
- 17: Tire outer protruding portion
- 20: Valve core
- 30: Inner sleeve
- 31: Inner sleeve main body
- 31G: External electrode
- 31N: Internal electrode
- 71: First conductive member
- 71G: External electrode
- 71N: Internal electrode
- 72: Second conductive member
- 72G: External electrode
- 72N: Internal electrode
- 80: Tire wheel
- 81H: Valve mounting hole
- 82: Tire
- 91: Internal circuit
- 96: External circuit
- 100, 100V: Tire valve

## Claims

1. A valve stem having a tubular structure, being fixed in a state of penetrating a valve mounting hole of a tire wheel, and accommodating a valve core, the valve stem comprising:
a pair of internal electrodes connected to an internal circuit in a tire;
a pair of external electrodes arranged on an outer peripheral surface of a tire outer protruding portion protruding to an outside of the tire in the valve stem and connectable to an external circuit outside the tire; and
first and second conductive members having the internal electrodes and the external electrodes and insulated from each other.

2. The valve stem according to claim 1, wherein the outer peripheral surface of the tire outer protruding portion is provided with a connector coupling portion having the pair of external electrodes and coupled to a connector provided in the external circuit.

3. The valve stem according to claim 1 or 2, further comprising:
a core fitting portion to which a tubular fixing base of the valve core is fitted at a position near a distal end of the tire outer protruding portion, wherein
the pair of external electrodes is disposed on a proximal end side of the core fitting portion in the tire outer protruding portion.

4. The valve stem according to claim 3, further comprising:
a conductive stem main body having a tubular structure, having the core fitting portion on an inner side, and being partially included in the tire outer protruding portion;
a side surface through-hole laterally penetrating a proximal end side portion of the core fitting portion in the stem main body of the tire outer protruding portion; and
an inner sleeve covering an outer side surface of a conductive inner sleeve main body with an insulating layer, the inner sleeve being fitted to an inner side of the proximal end side portion of the core fitting portion in the stem main body to seal the side surface through-hole, wherein
the stem main body forms part or whole of the first conductive member,
the external electrode of the first conductive member is an opening edge of the side surface through-hole of the stem main body or an additional component fixed to the opening edge,
the inner sleeve main body forms part or whole of the second conductive member, and
the external electrode of the second conductive member is part of the inner sleeve main body exposed to the outside by providing an opening corresponding to the side surface through-hole in the insulating layer, or is a penetrating component that penetrates the insulating layer and has one end portion connected to the inner sleeve main body and an other end portion exposed in the side surface through-hole.

5. The valve stem according to claim 4, wherein
the side surface through-hole forms an outer connector fitting portion to which a connector connected to the pair of external electrodes of the external circuit is fitted,
the external electrode of the first conductive member is the opening edge of the side surface through-hole of the stem main body, and
the external electrode of the second conductive member is part of the inner sleeve main body exposed to the outside through the opening of the insulating layer.

6. The valve stem according to claim 4 or 5, wherein
a proximal end portion of the stem main body is provided with an inner connector coupling portion coupled to a connector connected to the pair of internal electrodes of the internal circuit,
the internal electrode of the first conductive member is the proximal end portion of the stem main body, and
the internal electrode of the second conductive member is a proximal end portion of the inner sleeve main body.

7. The valve stem according to claim 1 or 2, further comprising:
an insulating resin stem main body having a tubular structure, having a core fitting portion to which the valve core is fitted on an inner side, and being partially included in the tire outer protruding portion;
a pair of bus bars embedded in the stem main body to form the first and second conductive members; and
a side surface opening formed in a state of being recessed in an outer side surface of the stem main body, a portion near one ends of the pair of bus bars being exposed inside the side surface opening, wherein
the pair of external electrodes is portions near the one ends of the pair of bus bars exposed inside the side surface opening.

8. The valve stem according to claim 7, wherein other end portions of the pair of bus bars protrude from a proximal end face of the stem main body to form the pair of internal electrodes.

9. A tire valve comprising: the valve stem according to any one of claims 1 to 8; and a valve core assembled in the valve stem.
